# FASCICULE DE BREVET EUROPEEN

(11) **EP 3 453 449 B1**
(45) Date de publication et mention de la délivrance du brevet: **19.10.2022**
(21) Numéro de dépôt: 18191613.1
(22) Date de dépôt: 30.08.2018
(51) Int. Cl.: B01J 19/32

(54) **ÉLÉMENTS DE GARNISSAGE STRUCTURE FORMÉ PAR UNE PLAQUE PLANE MUNI D'ENCOCHES ET D'ÉVIDEMENTS**
VERKLEIDUNGSELEMENTE EINER STRUKTUR, DIE AUS EINER FLACHEN PLATTE MIT EINSCHNITTEN UND AUSSPARUNGEN GEBILDET WIRD
STRUCTURED PACKING ELEMENTS FORMED BY A FLAT PLATE PROVIDED WITH NOTCHES AND RECESSES

(30) Priorité: 12.09.2017 FR 1758446
(43) Date de publication de la demande: 13.03.2019
(73) Titulaire: AXENS, 92508 Rueil-Malmaison Cedex (FR)
(72) Inventeur: LAMBERT, Nicolas, 92130 Issy-Les-Moulineaux (FR)
(74) Mandataire: IFP Energies nouvelles

(56) Documents cités:
- FR-A- 346 613
- FR-A1- 2 366 859
- JP-A- S5 240 474
- JP-A- S5 448 681
- JP-A- H07 251 062
- US-A- 4 427 606
- US-A- 4 744 928

## Description

La présente invention concerne le domaine du garnissage structuré, utilisé notamment pour une opération de stripage d'hydrocarbures entrainés ou adsorbés sur des grains de catalyseurs.

L'invention peut concerner notamment le domaine des procédés de craquage. La présente invention peut notamment être mise en œuvre dans un procédé de craquage catalytique en lit fluidisé (FCC : Fluid Catalytic Cracking selon la terminologie anglo-saxonne) pour craquer des charges lourdes telles que des résidus sous vide ou des distillats sous vide, mais également à des FCC traitant des charges plus légères. Elle peut également être mise en œuvre dans des unités de craquage de naphta (unités NCC ou Naphtha Catalytic Cracking selon la terminologie anglo-saxonne) ou encore dans des unités de craquage à forte conversion (DCC : Deep Catalytic Cracking selon la terminologie anglo-saxonne ou HS-FCC : High Severity Fluid Catalytic Cracking selon la terminologie anglo-saxonne), ou encore dans des unité de transformation du méthanol en oléfines (MTO : methanol to olefins selon la terminologie Anglo-saxonne) ou en essence (MTG : methanol to gasoline selon la terminologie anglo-saxonne).

Plus particulièrement, la présente invention peut être utilisée dans des unités de craquage catalytique en lit fluidisé (Fluid Catalytic Cracking selon la terminologie anglo-saxonne), également appelées unités FCC dans la suite de cette description.

Les unités FCC peuvent fonctionner soit avec un seul réacteur en courant ascendant (riser) ou descendant (downflow reactor) orienté vers la production d'essence, soit avec deux réacteurs, un réacteur principal orienté vers la production d'essence et un réacteur secondaire orienté vers la production de propylène.

Dans un procédé FCC, les hydrocarbures sont contactés dans le réacteur avec un catalyseur finement divisé. Lors de la réaction de craquage des hydrocarbures, dont certains sont en partie craqués, sont déposés sur le catalyseur. Ces hydrocarbures plus ou moins craqués sont généralement appelés « coke » Il est donc nécessaire de transporter le catalyseur vers un ou plusieurs régénérateurs afin d'éliminer ces hydrocarbures en continu et ainsi de régénérer le catalyseur.

Toutefois, il est nécessaire avant l'envoi du catalyseur usagé au régénérateur d'éliminer au préalable tout ou partie des hydrocarbures qui ont pénétré dans la porosité importante du catalyseur ou qui sont adsorbés sur sa surface. Cela permet de diminuer et mieux contrôler la température au régénérateur, et d'améliorer la récupération de produits valorisables issues du craquage. Cette opération est réalisée dans un strippeur dans lequel un gaz, généralement de la vapeur, est circulé à contre-courant du flux de catalyseur. Ledit gaz se charge en hydrocarbures gazeux éliminés ainsi de la surface ou de la porosité du catalyseur. L'efficacité de cette opération est augmentée par l'ajout d'inserts (baffles selon la terminologie anglo-saxonne) ou de garnissage (packing selon la terminologie anglo-saxonne) dans la zone de stripage.

Les inserts ou garnissage sont généralement disposés dans la partie inférieure du stripeur dans la phase dense de manière à réduire les entrainements de particules solides vers la phase diluée.

Un stripage efficace des hydrocarbures et précurseurs de coke présents sur le catalyseur usé est essentiel, d'autant que les charges traitées sont de plus en plus lourdes, ce qui nécessite des conditions opératoires de craquage plus sévères et engendre la formation de quantités de coke plus importantes sur le catalyseur.

Dans une unité catalytique opérant en lit fluidisé, le garnissage disposé dans la zone de stripage présente l'avantage d'assurer une bonne distribution du catalyseur dans la zone de stripage et d'avoir une bonne efficacité de contact entre le catalyseur usé et le fluide de stripage.

L'une des difficultés rencontrées lors de l'installation d'un garnissage structuré est la nécessité de découper les différentes couches en secteurs de manière à pouvoir les introduire plus facilement dans les enceintes de strippage. La structure est ensuite réassemblée à l'intérieur de la capacité, couche par couche. L'assemblage initial des différents secteurs nécessite une mise en position des éléments constituant ces secteurs pour procéder à leur soudage à chaque point de jonction. Ainsi, le garnissage structuré actuellement nécessite un montage long et complexe.

La demande de brevet EP 0719850 décrit un exemple d'un tel garnissage structuré utilisé dans une enceinte de strippage. Toutefois, la structure de garnissage décrite dans cette demande de brevet présente les inconvénients décrits ci-dessus : un assemblage long et complexe.

En outre, le garnissage structuré trouve également des applications pour la mise en contact de fluides, notamment dans le domaine du traitement de gaz, de la distillation, de captage de gaz acides, de déshydratation ou de séparation d'air. Pour ces domaines d'application, le garnissage remplit des fonctions similaires au garnissage utilisé pour le strippage. Pour ces applications, le garnissage doit aussi être simple et rapide à monter au sein de la colonne.

Le brevet US 4744928 décrit un garnissage structuré formé par des éléments allongés inclinés.

La demande de brevet JP H7-2510652 concerne un distributeur de liquide avec un assemblage de plaques en son sein pour la distribution du liquide.

Pour pallier ces inconvénients, la présente invention concerne un élément de garnissage structuré ayant la forme d'une plaque plane rectangulaire, pourvue d'encoches et d'évidements. Les encoches sont destinées à l'assemblage par emboîtement des éléments de garnissage structuré ensemble pour former le garnissage structuré, ainsi, le garnissage structuré peut être assemblé par emboîtement, ce qui permet de faciliter la mise et le maintien en position des éléments de garnissage en vue du soudage, voire d'éliminer les soudures. Les évidements sont prévus pour former des canaux au sein du garnissage structuré, afin de faciliter les échanges au sein du garnissage.

La présente invention concerne également une structure de garnissage obtenu par assemblage de tels éléments de garnissage, l'utilisation d'un tel garnissage pour une opération de mise en contact d'un gaz et d'un catalyseur, et un procédé de fabrication d'un tel garnissage structuré.

### Le dispositif selon l'invention

La présente invention concerne un élément de garnissage structuré, tel que décrit dans la revendication 1, ayant la forme d'une plaque plane sensiblement rectangulaire. Ledit élément de garnissage comprend une pluralité d'encoches sensiblement rectangulaires pour l'emboîtement de deux éléments de garnissage inclinés l'un par rapport à l'autre, et une pluralité d'évidements sensiblement triangulaires pour la formation de canaux au sein du garnissage structuré, lesdits évidements étant des ouvertures formées dans la plaque plane qui débouchent sur une arrête de la plaque plane, lesdites encoches et lesdits évidements étant répartis sur les deux longueurs de ladite plaque plane de manière symétrique par rapport à l'axe longitudinal de ladite plaque plane de telle sorte que des encoches d'un coté de la plaque font face à d'autres encoches de l'autre côté de la plaque plane, et que les des évidements d'un côté de la plaque plane font face à d'autres évidements de l'autre coté de la plaque plane, et en ce que lesdits évidements sont agencés entre deux encoches.

Conformément à une mise en œuvre, lesdites encoches ont une hauteur h sensiblement égale à l'épaisseur e de ladite plaque plane.

Selon un mode de réalisation, la longueur L de ladite plaque plane est comprise entre 25 et 100 cm, de préférence entre 45 et 55 cm.

Selon une option de réalisation, la largeur I de ladite plaque plane est comprise entre 3 et 15 cm, de préférence entre 5 et 10 cm.

Conformément à une mise en œuvre, l'épaisseur e de ladite plaque plane est comprise entre 2 et 10 mm, de préférence entre 4 et 8 mm.

Avantageusement, la distance d entre deux encoches consécutives est comprise 1 et 50 cm, de préférence entre 10 et 30 cm.

La présente invention concerne également une structure de garnissage formant un volume comprenant un agencement d'éléments de garnissage selon l'une des caractéristiques précédentes. Ledit agencement comprend une première série d'éléments de garnissage agencés selon une première direction, et une deuxième série d'éléments de garnissage agencés selon une deuxième direction inclinée par rapport à ladite première direction, de telle sorte que les éléments de garnissage de ladite deuxième série sont emboités dans des encoches des éléments de garnissage de ladite première série, et de telle sorte que les éléments de garnissage de ladite première série sont emboités dans des encoches des éléments de garnissage de ladite deuxième série.

Selon un mode de réalisation de l'invention, lesdits éléments de garnissage desdites première et deuxième séries sont fixés entre eux, de préférence par soudage, par collage, par vissage ou par boulonnage.

Conformément à une mise en œuvre, ledit volume de garnissage structuré a sensiblement une forme d'une portion angulaire d'un cylindre.

Selon un aspect, ledit volume de garnissage structuré a une hauteur H comprise entre 10 et 200 cm, de préférence entre 15 et 150 cm.

Selon une caractéristique, l'angle formé par la première direction et la deuxième direction est compris entre 10 et 90°, de préférence entre 30 et 90°.

De plus, l'invention concerne une utilisation d'une structure de garnissage selon l'une des caractéristiques précédentes pour la mise en contact d'un gaz avec un catalyseur, notamment pour une opération de strippage dudit catalyseur.

Procédé de fabrication d'une structure de garnissage, dans lequel on réalise les étapes suivantes :
a) on fabrique une pluralité d'éléments de garnissage selon l'une des caractéristiques précédentes ;
b) on construit un agencement desdits éléments de garnissage au moyen des étapes suivantes :
   i) on positionne au moins deux éléments de garnissage d'une première série d'éléments de garnissage selon une première direction ;
   ii) on emboîte au moins deux éléments de garnissage d'une deuxième série d'éléments de garnissage selon une deuxième direction inclinée par rapport à ladite première direction au sein desdites encoches desdits éléments de garnissage de ladite première série ;
   iii) on emboîte au moins deux éléments de garnissage d'une première série d'éléments de garnissage selon ladite première direction au sein desdites encoches desdits éléments de garnissage de ladite deuxième série ; et
   iv) on répète les étapes ii) et iii) pour former le volume souhaité.

Selon un mode de réalisation de l'invention, le procédé de fabrication comprend une étape de fixation desdits éléments de garnissage, de préférence par soudage, par collage, par vissage ou par boulonnage.

Conformément à une mise en œuvre, le procédé de fabrication comprend une étape de découpe dudit volume de garnissage structuré pour former une portion angulaire de cylindre.

### Présentation succincte des figures

D'autres caractéristiques et avantages du dispositif et du procédé selon l'invention, apparaîtront à la lecture de la description ci-après d'exemples non limitatifs de réalisations, en se référant aux figures annexées et décrites ci-après.
La figure 1 illustre un stripper selon un mode de réalisation de l'invention. La figure 1a est une vue générale d'un stripper incluant une structure de garnissage selon l'invention. La figure 1b illustre le garnissage structuré du stripper de la figure 1.
La figure 2 représente un élément de garnissage selon un mode de réalisation de l'invention.
La figure 3 représente une vue en plan d'une structure de garnissage selon un mode de réalisation de l'invention.
La figure 4 représente une vue tridimensionnelle d'une structure de garnissage selon un mode de réalisation de l'invention.

### Description détaillée de l'invention

### Elément de garnissage

La présente invention concerne un élément de garnissage structuré. On appelle garnissage structuré une juxtaposition de plusieurs éléments unitaires identiques ou non, agencés de manière ordonnée. Selon l'invention, l'élément unitaire de garnissage structuré a une forme d'une plaque plane sensiblement rectangulaire. En d'autres termes, la plaque plane a une forme sensiblement parallélépipédique. On appelle plaque plane, un composant dont l'épaisseur est très inférieure aux autres dimensions de la plaque. La plaque est dite plane car elle ne comporte aucun pli.

Selon l'invention, la plaque plane comporte au moins deux encoches destinées à l'emboîtement d'un autre élément de garnissage de manière inclinée par rapport à l'élément de garnissage considéré. En d'autres termes, les encoches permettent d'assembler deux éléments de garnissage de manière inclinée l'un par rapport à l'autre. Ainsi, le garnissage structuré peut être assemblé par emboîtement, ce qui permet de faciliter la mise et le maintien en position des éléments en vue du soudage, voire d'éliminer les soudures. De cette manière, le montage du garnissage structuré devient simple et rapide. Les encoches sont des ouvertures formées dans la plaque plane qui débouchent sur une arrête de la plaque plane. De préférence, les encoches sont prévues pour l'insertion de l'épaisseur d'un élément de garnissage.

Conformément à l'invention, la plaque plane comporte au moins deux évidements destinés à former des canaux au sein du garnissage structuré. Les évidements permettent de faciliter les échanges au sein du garnissage structuré, notamment en augmentant la surface spécifique du garnissage structuré, de limiter les effets de bouchage et des passages préférentiels au sein du garnissage structuré. Les évidements sont des ouvertures formées dans la plaque plane qui débouchent sur une arête de la plaque plane.

Selon l'invention, les encoches et les évidements sont répartis sur les deux longueurs de la plaque plane, de manière symétrique par rapport à l'axe longitudinal de la plaque plane. En d'autres termes, des encoches et des évidements sont prévus de part et d'autre de la plaque plane, des encoches d'un côté de la plaque plane faisant face à d'autres encoches de l'autre côté, et des évidements d'un côté de la plaque plane faisant face à d'autres évidement de l'autre côté. Cette symétrie permet de former un agencement ordonné et régulier des éléments de garnissage au sein de la structure de garnissage. De préférence, les encoches et les évidements peuvent être régulièrement répartis sur les longueurs de la plaque plane.

L'emboîtement des éléments de garnissage présente en outre l'avantage de rendre la structure modulaire, facilitant le choix de la forme de la structure de garnissage, et facilitant aussi la maintenance et l'entretien de la structure de garnissage. En effet, avec ces éléments de garnissage, il est possible de remplacer un seul élément de garnissage indépendamment du reste de la structure.

Selon un exemple de réalisation, l'élément de garnissage peut être réalisé en métal. Il peut être formé par usinage, pour moulage ou par fabrication additive.

Selon l'invention, les encoches peuvent être sensiblement rectangulaires, de manière à faciliter l'emboîtement de deux éléments de garnissage.

Alternativement, les évidements peuvent avoir d'autres formes, par exemple triangulaire, polygonale, oblongue, demi-circulaire, etc.

Avantageusement, pour assurer un maintien et une mise en position des éléments de garnissage lors de la construction du garnissage structuré, les encoches peuvent avoir une hauteur sensiblement égale à l'épaisseur d'un élément de garnissage.

De manière avantageuse, les encoches peuvent être réalisées par usinage.

Conformément à l'invention, les évidements peuvent avoir une forme sensiblement triangulaire, la base du triangulaire correspondant à l'arête d'une longueur de la plaque plane. Cette forme triangulaire est simple à réaliser et permet de former des canaux au sein du garnissage structuré. De plus, la forme triangulaire permet d'augmenter la surface de transfert entre le solide et le fluide ou entre les deux fluides.

Alternativement, les évidements peuvent avoir d'autres formes, par exemple rectangulaire, oblongue, polygonale, demi-circulaire, etc.

De préférence, les évidements peuvent être plus profonds que les encoches.

De manière avantageuse, les évidements peuvent être réalisés par usinage.

Selon une mise en œuvre de l'invention, les évidements peuvent être placés entre deux encoches. En d'autres termes, chaque longueur de la plaque plane comprend une alternance d'encoches et d'évidements. Ainsi, au sein du garnissage structuré, il y a un canal entre chaque élément de garnissage, ce qui favorise les échanges au sein du garnissage structuré.

Conformément à une caractéristique de l'invention, la longueur d'un élément de garnissage (plaque plane) peut être compris entre 25 et 100 cm, de préférence entre 45 et 55 cm. Ainsi, la longueur de l'élément de garnissage peut définir une dimension de la structure de garnissage structuré, qui correspond à la hauteur d'une couche de garnissage structuré.

Selon un aspect, la largeur d'un élément de garnissage (plaque plane) peut être compris entre 3 et 15 cm, de préférence entre 5 et 10 cm. Ainsi, les espaces formés dans le garnissage structuré ont des dimensions adaptées pour favoriser les échanges entre les deux fluides ou entre un fluide et des solides (par exemple catalyseur).

Selon un mode de réalisation de l'invention, l'épaisseur d'un élément de garnissage (plaque plane) est compris entre 2 et 10 mm, de préférence entre 4 et 8 mm. Cette épaisseur permet un emboîtement assurant la mise en place et le maintien en position des éléments de garnissage les uns par rapport aux autres.

Conformément à une mise en œuvre de l'invention, la distance séparant deux encoches consécutives (et le cas échéant entre deux évidements consécutifs) est comprise entre 1 et 50 cm, de préférence entre 10 et 30 cm. Cette distance permet de garantir un espace adapté entre les éléments de garnissages, pour favoriser les échanges entre deux fluides ou entre un fluide et des solides (par exemple catalyseur).

Selon un exemple de réalisation, la profondeur des encoches est comprise entre 3 et 100 mm, de préférence entre 10 et 50 mm. Cette profondeur permet un emboîtement simple et solide des éléments de garnissage.

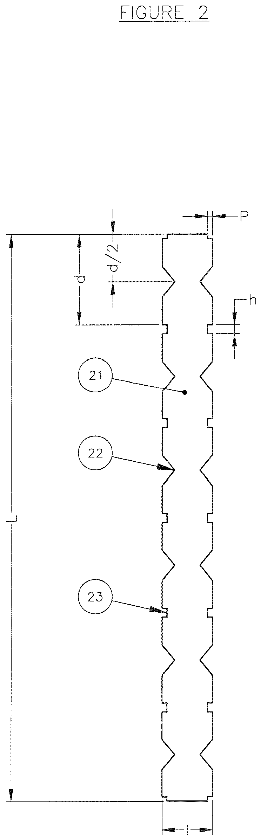

La figure 2 illustre, schématiquement et de manière non limitative, un élément de garnissage selon un mode de réalisation de l'invention. L'élément de garnissage 21 a une forme sensiblement rectangulaire, de longueur L, de largeur l (l'épaisseur non représentée est inférieure à la longueur L et à la largeur l). L'élément de garnissage 21 comprend, sur ses deux longueurs, une pluralité d'encoches 23 sensiblement rectangulaires, de hauteur h et de profondeur p, et dont la hauteur h est sensiblement égale à l'épaisseur (non représentée) de l'élément de garnissage. Les encoches sont régulièrement réparties sur les deux longueurs de l'élément de garnissage, et sont espacées d'une distance d. En outre, l'élément de garnissage comporte une pluralité d'évidements 22 sensiblement triangulaires. Les évidements 22 sont agencés entre les encoches 23, sensiblement à la moitié de la distance d séparant deux encoches. Les dimensions L, l, h, d, et p sont de préférences choisies parmi les plages décrites ci-dessus. Selon un exemple de réalisation non limitatif, la longueur L vaut 50 cm, la largeur l vaut 7 cm, la hauteur h vaut 6 mm, la profondeur p vaut 8 mm et la distance d vaut 12 cm.

### Structure de garnissage

De plus, la présente invention concerne une structure de garnissage formant un volume comprenant un agencement d'éléments de garnissage selon l'une quelconque des combinaisons des caractéristiques décrites ci-dessus (formes géométriques, dimensions, agencement des encoches et évidements, etc.). L'agencement comprend une première série d'éléments de garnissage agencés selon une première direction, et une deuxième série d'éléments de garnissage agencés selon une deuxième direction inclinée par rapport à ladite première direction, de telle sorte que les éléments de garnissage de la deuxième série sont emboités dans des encoches des éléments de garnissage de la première série, et de telle sorte que les éléments de garnissage de la première série sont emboités dans des encoches des éléments de garnissage de la deuxième série. Ainsi, la structure de garnissage est constituée d'une pluralité d'éléments de garnissage s'entrecoupant, de manière inclinée, et emboités les uns par rapport aux autres.

Ainsi assemblés, les éléments de garnissage des deux séries forment un maillage régulier tridimensionnel délimitant des canaux pour favoriser les échanges. Les évidements des éléments de garnissage augmentent la section des canaux.

La première direction correspond à l'axe longitudinal des éléments de garnissage de la première série, et la deuxième direction correspond à l'axe longitudinal des éléments de garnissage de la deuxième série. Les deux directions sont inclinées au sein du garnissage.

Selon un aspect de l'invention, l'angle d'inclinais entre la première direction et la deuxième direction est compris entre 10 et 90°, de préférence entre 30 et 90°. Une telle inclinaison permet un mouvement latéral pour les particules solides, qui peuvent par conséquent être mélangés de manière plus importante.

Dans le cas où la première direction est sensiblement perpendiculaire à la deuxième direction, au sein du garnissage structuré, les axes transversaux (c'est-à-dire selon la largeur des éléments de garnissage) sont alignés, et les axes azimutaux (c'est-à-dire selon l'épaisseur des éléments de garnissage) sont perpendiculaires les uns par rapport aux autres.

De manière avantageuse, les éléments de garnissage de la deuxième série sont identiques aux éléments de garnissage de la première série.

Avantageusement, pour favoriser l'emboîtement des éléments de garnissage, les encoches des élément de garnissage de la première série peuvent être insérées dans les encoches des éléments de garnissage de la deuxième série.

L'emboîtement au moyen des encoches permet d'avoir une structure de garnissage stable et solide, c'est pourquoi selon un mode de réalisation, aucune solidarisation supplémentaire des éléments de garnissage n'est mise en œuvre. Ainsi, l'assemblage de la structure de garnissage est facilité.

Alternativement, afin de renforcer la stabilité et la solidité de la structure de garnissage, une solidarisation de la structure est mise en œuvre par fixation des éléments de garnissage, par exemple par soudage, par collage, par vissage, par boulonnage, ou tout moyen analogue. De préférence, la fixation est mise en œuvre par soudage. Au vu de la solidité de la structure, moins de soudures sont nécessaires que pour les structures de garnissage selon l'art antérieur, ce qui facilite son montage.

Selon un mode de réalisation de l'invention, et afin de faciliter l'installation de la structure de garnissage au sein d'une colonne, le volume de garnissage structuré peut avoir sensiblement une forme d'une portion angulaire de cylindre (c'est-à-dire sensiblement la forme d'une portion de camembert).

Conformément à un aspect de l'invention, le volume de la structure de garnissage peut avoir une hauteur comprise entre 10 et 200 cm, de préférence entre 15 et 150 cm, de manière plus préférée entre 20 et 100 cm, et de manière très préférée entre 20 et 50 cm. Cette dimension permet une insertion de la structure de garnissage dans la colonne. De plus, cette dimension correspond sensiblement à la longueur d'un élément de garnissage.

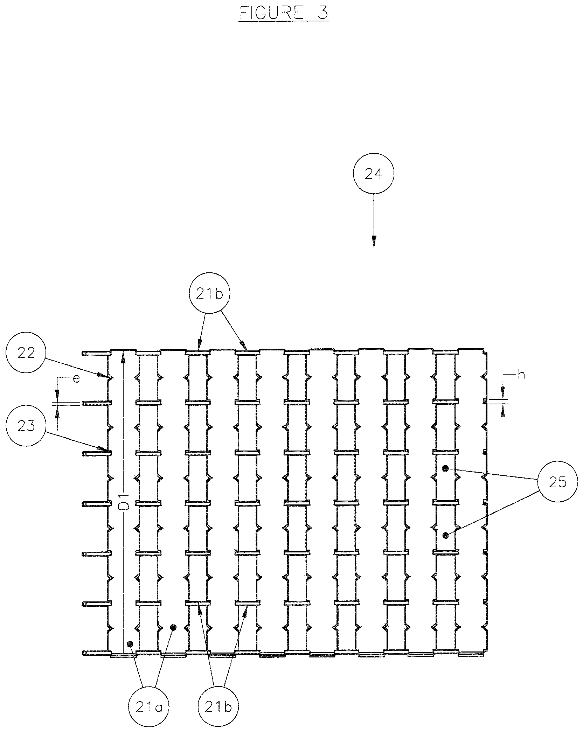

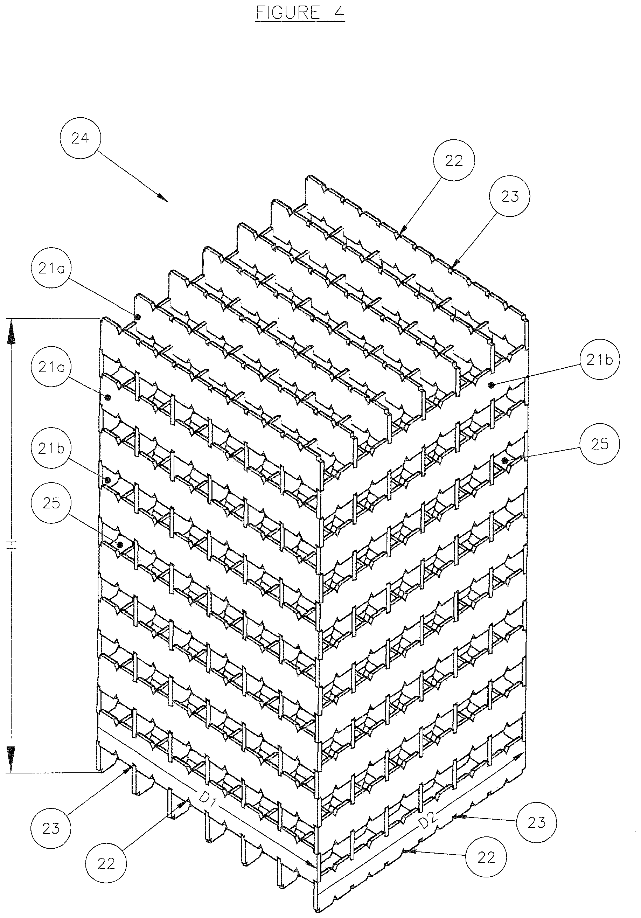

Les figures 3 et 4 représentent, schématiquement et de manière non limitative, une structure de garnissage selon un mode de réalisation de l'invention. La figure 3 est une vue de côté de la structure de garnissage 24, et la figure 4 est une vue tridimensionnelle de la structure de garnissage 24. La structure de garnissage comprend une pluralité d'éléments de garnissage 21 pourvus d'encoches 23 et d'évidements 22. Pour l'exemple illustré, les éléments de garnissage 21 correspondent aux éléments de garnissage illustré sur la figure 2. La structure de garnissage comprend une première série d'éléments de garnissage 21a orientés selon une première direction D1 (la direction D1 est verticale sur la figure 3 et horizontale sur la figure 4), et une deuxième série d'éléments de garnissage 21b orientés selon une deuxième direction D2 (la direction D2 est perpendiculaire à la planche de la figure 3 et est horizontale sur la figure 4). La direction D2 est orthogonale à la direction D1. De plus, les axes transversaux (c'est-à-dire selon la largeur des éléments de garnissage) sont alignés, et les axes azimutaux (c'est-à-dire selon l'épaisseur des éléments de garnissage) sont perpendiculaires. Pour le mode de réalisation illustré, les encoches 23 des éléments de garnissage 21a de la première série sont emboitées dans les encoches 23 des éléments de garnissage 21b de la deuxième série, et réciproquement. De plus, la hauteur h des encoches 23 et sensiblement égale à l'épaisseur e des éléments de garnissage. Ainsi assemblés, les éléments de garnissage 21a et 21b forment un maillage tridimensionnel délimitant des canaux 25 pour favoriser les échanges. Les évidements 23 des éléments de garnissage 21a et 21b augmentent la section des canaux 25.

Pour le mode de réalisation illustré, l'angle d'inclinaison de la première direction D1 par rapport à la deuxième direction D2 vaut 90° (orthogonalité). De manière alternative, cet angle d'inclinaison pourrait être compris entre 10 et 90°, de préférence entre 30 et 90°.

### Applications

En outre, la présente invention concerne une utilisation d'un structure de garnissage selon une combinaison quelconque des caractéristiques décrites précédemment pour la mise en contact d'un gaz, avec un catalyseur, notamment pour une opération de strippage d'un catalyseur, par exemple pour un procédé FCC, NCC, DCC, HS-FCC, MTO, MTG ou tout procédé analogue..

Lors de cette opération de strippage du catalyseur, on élimine tout ou partie des hydrocarbures qui ont pénétré dans la porosité importante du catalyseur ou qui sont adsorbés sur sa surface. Cela permet de diminuer et mieux contrôler la température au régénérateur (opération postérieure au strippage), et d'améliorer la récupération de produits valorisables issues du craquage. Cette opération est réalisée dans un strippeur dans lequel un gaz, généralement de la vapeur, est circulé à contre-courant du flux de catalyseur. Ledit gaz se charge en hydrocarbures gazeux éliminés ainsi de la surface ou de la porosité du catalyseur. L'efficacité de cette opération est augmentée par l'ajout de garnissage dans la zone de stripage.

Le garnissage est disposé dans la partie inférieure du stripeur dans la phase dense de manière à réduire les entrainements de particules solides vers la phase diluée.

Dans une unité catalytique opérant en lit fluidisé, le garnissage selon l'invention présente l'avantage d'assurer une bonne distribution du catalyseur dans la zone de stripage et d'avoir une bonne efficacité de contact entre le catalyseur usé et le fluide de stripage.

Pour cette utilisation, l'enceinte de strippage peut comprendre :
- un système de séparation du catalyseur et des gaz craqués,
- un cyclone pour séparer une fraction de catalyseur,
- un garnissage tel que décrit précédemment pour mettre en contact le catalyseur avec un gaz dans le but d'éliminer les hydrocarbures ayant pénétrés ou ayant été adsorbés par le catalyseur, et
- au moins une conduite d'insertion de gaz pour distribuer le gaz sur le garnissage.

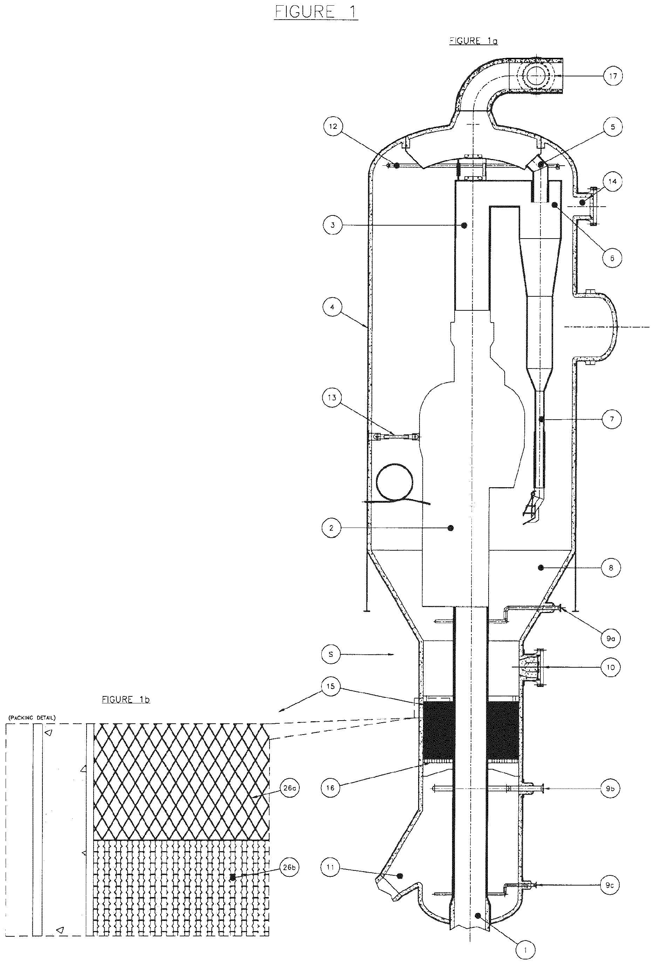

La figure 1a présente, schématiquement et de manière non limitative, une vue générale d'un stripper S incluant une structure de garnissage selon un mode de réalisation de l'invention. Sur cette figure est visible la partie haute du réacteur 1 qui fonctionne à courant ascendant (riser) et débouche dans un système de séparation 2 permettant de séparer le catalyseur et les gaz craqués. Ledit système peut être de tout type connu de l'homme du métier. Les gaz craqués sont envoyés via la conduite 3 dans le cyclone 6 et sortent du récipient de désengagement (en anglais disengaging vessel) 4, situé au-dessus de la zone de stripage du stripper S, via les conduites 5 et 17.

Une fraction supplémentaire de catalyseur est séparée dans le cyclone 6 et envoyée dans la jambe (en anglais dipleg) 7 pour aboutir dans le lit dense de catalyseur 8 situé un peu plus bas au-dessus du garnissage 15. Le garnissage 15 est obtenu par superposition de plusieurs couches de structure de garnissage telle que décrite précédemment. Le garnissage 15 est maintenu dans le stripper S via des grilles ou des supports 16. Le catalyseur est strippé par la vapeur admise via les conduits 9a, 9b et 9c puis envoyé vers le régénérateur (non représenté) via la conduite 11. L'élément 12 optionnel permet une injection de vapeur en tête de stripper afin de défavoriser la formation de coke. L'élément 13 est un guide permettant de maintenir le système de séparation 2 à l'écart de la paroi du récipient de désengagement 4.

La figure 1b présente, schématiquement et de manière non limitative, une vue plus détaillée du garnissage 15 de la figure 1a. Le garnissage 15 comprend au moins deux couches de garnissage 26a et 26b orientées différemment pour optimiser les échanges. De plus, dans la couche de garnissage 26a, l'angle d'inclinaison de la première direction par rapport à la deuxième inclinaison vaut sensiblement 60°. Dans la couche de garnissage 26b, l'angle d'inclinaison de la première direction par rapport à la deuxième inclinaison vaut sensiblement 90°.

Le garnissage structuré selon l'invention trouve également des applications pour la mise en contact de fluides, par exemple un gaz et un liquide, notamment dans le domaine du traitement de gaz, de la distillation, de captage de gaz acides, de déshydratation ou de séparation d'air.

### Procédé de fabrication

La présente invention concerne également un procédé de fabrication d'une structure de garnissage, dans lequel on réalise les étapes suivantes :
a) on fabrique une pluralité d'éléments de garnissage selon l'une quelconque des combinaisons de caractéristiques précédemment décrites, par exemple par usinage, par moulage ou par fabrication additive ;
b) on construit un agencement des éléments de garnissage au moyen des étapes suivantes :
   i) on positionne au moins deux éléments de garnissage d'une première série d'éléments de garnissage selon une première direction ;
   ii) on emboîte au moins deux éléments de garnissage d'une deuxième série d'éléments de garnissage selon une deuxième direction inclinée par rapport à la première direction au sein des encoches des éléments de garnissage de la première série ;
   iii) on emboîte au moins deux éléments de garnissage d'une première série d'éléments de garnissage selon la première direction au sein des encoches des éléments de garnissage de la deuxième série ; et
   iv) on répète les étapes ii) et iii) pour former le volume souhaité.

Ainsi assemblés, les éléments de garnissage des deux séries forment un maillage tridimensionnel délimitant des canaux pour favoriser les échanges. Les évidements des éléments de garnissage augmentent la section des canaux.

La première direction correspond à l'axe longitudinal des éléments de garnissage de la première série, et la deuxième direction correspond à l'axe longitudinal des éléments de garnissage de la deuxième série. Les deux directions sont inclinées l'une par rapport à l'autre au sein du garnissage (avec un angle compris entre 10 et 90°, de préférence entre 30 et 90°).

Dans le cas où la première direction est sensiblement perpendiculaire à la deuxième direction, au sein du garnissage structuré, les axes transversaux (c'est-à-dire selon la largeur des éléments de garnissage) sont alignés, et les axes azimutaux (c'est-à-dire selon l'épaisseur des éléments de garnissage) sont perpendiculaires.

Selon un mode de réalisation de l'invention, le procédé de fabrication ne comprend pas d'étape de fixation des éléments de garnissage entre eux. En effet, l'emboîtement au moyen des encoches permet d'avoir une structure de garnissage stable et solide. Ainsi, l'assemblage de la structure de garnissage est facilité.

En variante, le procédé de fabrication comprend une étape de fixation des éléments de garnissage entre eux, notamment par soudage, collage, vissage, boulonnage ou tout moyen analogue. De préférence, la solidarisation est mise en œuvre par soudage. Au vu de la solidité de la structure, moins de soudures sont nécessaires que pour les structures de garnissage selon l'art antérieur, ce qui facilite son montage.

Conformément à une mise en œuvre de l'invention, le procédé de fabrication comprend une étape de découpe de la structure de garnissage à la forme désirée, notamment selon une portion angulaire de cylindre (c'est-à-dire sensiblement une forme d'une portion de camembert). Ainsi, l'insertion du garnissage dans une colonne est facilitée, ainsi que son montage.

## Revendications

1. Elément de garnissage structuré ayant la forme d'une plaque plane sensiblement rectangulaire, **caractérisé en ce que** ledit élément de garnissage (21) comprend une pluralité d'encoches (23) sensiblement rectangulaires pour l'emboîtement de deux éléments de garnissage inclinés l'un par rapport à l'autre, et une pluralité d'évidements (22) sensiblement triangulaires pour la formation de canaux au sein du garnissage structuré, lesdits évidements (22) étant des ouvertures formées dans la plaque plane qui débouchent sur une arrête de la plaque plane, lesdites encoches (23) et lesdits évidements (22) étant répartis sur les deux longueurs de ladite plaque plane de manière symétrique par rapport à l'axe longitudinal de ladite plaque plane de telle sorte que des encoches (23) d'un côté de la plaque plane font face à d'autres encoches (23) de l'autre côté de la plaque plane, et que des évidements (22) d'un côté de la plaque plane font face à d'autres évidements (22) de l'autre côté de la plaque plane, et **en ce que** lesdits évidements (22) sont agencés entre deux encoches (23).

2. Elément de garnissage selon l'une des revendications précédentes, dans lequel lesdites encoches (23) ont une hauteur h sensiblement égale à l'épaisseur e de ladite plaque plane.

3. Elément de garnissage selon l'une des revendications précédentes, dans lequel la longueur L de ladite plaque plane est comprise entre 25 et 100 cm, de préférence entre 45 et 55 cm.

4. Elément de garnissage selon l'une des revendications précédentes, dans lequel la largeur l de ladite plaque plane est comprise entre 3 et 15 cm, de préférence entre 5 et 10 cm.

5. Elément de garnissage selon l'une des revendications précédentes, dans lequel l'épaisseur e de ladite plaque plane est comprise entre 2 et 10 mm, de préférence entre 4 et 8 mm.

6. Elément de garnissage selon l'une des revendications précédentes, dans lequel la distance d entre deux encoches (23) consécutives est comprise 1 et 50 cm, de préférence entre 10 et 30 cm.

7. Structure de garnissage formant un volume comprenant un agencement d'éléments de garnissage (21) selon l'une des revendications précédentes, **caractérisée en ce que** ledit agencement comprend une première série d'éléments de garnissage (21a) agencés selon une première direction (D1), et une deuxième série d'éléments de garnissage (21b) agencés selon une deuxième direction (D2) inclinée par rapport à ladite première direction (D1), de telle sorte que les éléments de garnissage (21b) de ladite deuxième série sont emboités dans des encoches (23) des éléments de garnissage (21a) de ladite première série, et de telle sorte que les éléments de garnissage (21b) de ladite première série sont emboités dans des encoches (23) des éléments de garnissage (21b) de ladite deuxième série.

8. Structure de garnissage selon la revendication 7, dans laquelle lesdits éléments de garnissage (21a, 21b) desdites première et deuxième séries sont fixés entre eux, de préférence par soudage, par collage, par vissage ou par boulonnage.

9. Structure de garnissage selon l'une des revendications 7 ou 8, dans laquelle ledit volume de garnissage structuré (24) a sensiblement une forme d'une portion angulaire d'un cylindre.

10. Structure de garnissage selon l'une des revendications 7 à 9, dans laquelle ledit volume de garnissage structuré (24) a une hauteur H comprise entre 10 et 200 cm, de préférence entre 15 et 150 cm.

11. Structure de garnissage selon l'une des revendication 7 à 10, dans laquelle l'angle formé entre ladite première direction D1 et ladite deuxième direction D2 est compris entre 10 et 90°, de préférence entre 30 et 90°.

12. Utilisation d'une structure de garnissage (24) selon l'une des revendications 7 à 11 pour la mise en contact d'un gaz avec un catalyseur, notamment pour une opération de strippage dudit catalyseur.

13. Procédé de fabrication d'une structure de garnissage, dans lequel on réalise les étapes suivantes :
a) on fabrique une pluralité d'éléments de garnissage (21) selon l'une des revendications 1 à 6 ;
b) on construit un agencement desdits éléments de garnissage (21) au moyen des étapes suivantes :
i) on positionne au moins deux éléments de garnissage (21a) d'une première série d'éléments de garnissage selon une première direction (D1) ;
ii) on emboîte au moins deux éléments de garnissage (21b) d'une deuxième série d'éléments de garnissage selon une deuxième direction (D2) inclinée par rapport à ladite première direction (D1) au sein desdites encoches (23) desdits éléments de garnissage (21a) de ladite première série ;
iii) on emboîte au moins deux éléments de garnissage (21a) d'une première série d'éléments de garnissage (21) selon ladite première direction (D1) au sein desdites encoches (23) desdits éléments de garnissage (21b) de ladite deuxième série ; et
iv) on répète les étapes ii) et iii) pour former le volume souhaité.

14. Procédé de fabrication selon la revendication 13, dans lequel le procédé de fabrication comprend une étape de fixation desdits éléments de garnissage, de préférence par soudage, par collage, par vissage ou par boulonnage.

15. Procédé de fabrication selon l'une des revendications 13 ou 14, dans lequel le procédé de fabrication comprend une étape de découpe dudit volume de garnissage structuré (24) pour former une portion angulaire de cylindre.

## Patentansprüche

1. Strukturiertes Packungselement mit der Form einer im Wesentlichen rechteckigen flachen Platte, **dadurch gekennzeichnet, dass** das Packungselement (21) mehrere im Wesentlichen rechteckige Kerben (23) für das Einstecken von zwei zueinander geneigten Packungselementen und mehrere im Wesentlichen dreieckige Aussparungen (22) für das Ausbilden von Kanälen innerhalb der strukturierten Packung umfasst, wobei die Aussparungen (22) in der flachen Platte ausgebildete Öffnungen sind, die in eine Kante der flachen Platte münden, wobei die Kerben (23) und die Aussparungen (22) symmetrisch zur Längsachse der flachen Platte über die beiden Längen der flachen Platte verteilt sind, so dass Kerben (23) einer Seite der flachen Platte anderen Kerben (23) der anderen Seite der flachen Platte gegenüberliegen und dass Aussparungen (22) einer Seite der flachen Platte anderen Aussparungen (22) der anderen Seite der flachen Platte gegenüberliegen, und dass die Aussparungen (22) zwischen zwei Kerben (23) angeordnet sind.

2. Packungselement nach einem der vorangehenden Ansprüche, wobei die Kerben (23) eine Höhe h aufweisen, die im Wesentlichen gleich der Dicke e der flachen Platte ist.

3. Packungselement nach einem der vorangehenden Ansprüche, wobei die Länge L der flachen Platte zwischen 25 und 100 cm, vorzugsweise zwischen 45 und 55 cm, beträgt.

4. Packungselement nach einem der vorangehenden Ansprüche, wobei die Breite l der flachen Platte zwischen 3 und 15 cm, vorzugsweise zwischen 5 und 10 cm, beträgt.

5. Packungselement nach einem der vorangehenden Ansprüche, wobei die Dicke e der flachen Platte zwischen 2 und 10 mm, vorzugsweise zwischen 4 und 8 mm, beträgt.

6. Packungselement nach einem der vorangehenden Ansprüche, wobei der Abstand d zwischen zwei aufeinanderfolgenden Kerben (23) zwischen 1 und 50 cm, vorzugsweise zwischen 10 und 30 cm, beträgt.

7. Volumenbildende Packungsstruktur, umfassend eine Anordnung von Packungselementen (21) nach einem der vorangehenden Ansprüche, **dadurch gekennzeichnet, dass** die Anordnung eine erste Reihe von Packungselementen (21a), die in einer ersten Richtung (D1) angeordnet sind, und eine zweite Reihe von Packungselementen (21b), die in einer in Bezug auf die erste Richtung (D1) geneigten zweiten Richtung (D2) angeordnet sind, umfasst, so dass die Packungselemente (21b) der zweiten Reihe in die Kerben (23) der Packungselemente (21a) der ersten Reihe eingesteckt sind, und so dass die Packungselemente (21b) der ersten Reihe in die Kerben (23) der Packungselemente (21b) der zweiten Reihe eingefügt sind.

8. Packungsstruktur nach Anspruch 7, wobei die Packungselemente (21a, 21b) der ersten und der zweiten Reihe aneinander befestigt sind, vorzugsweise durch Schweißen, Kleben, Schrauben oder Bolzen.

9. Packungsstruktur nach einem der Ansprüche 7 oder 8, wobei das strukturierte Packungsvolumen (24) im Wesentlichen die Form eines Winkelabschnitts eines Zylinders aufweist.

10. Packungsstruktur nach einem der Ansprüche 7 bis 9, wobei das strukturierte Packungsvolumen (24) eine Höhe H aufweist, die zwischen 10 und 200 cm, vorzugsweise zwischen 15 und 150 cm, beträgt.

11. Packungsstruktur nach einem der Ansprüche 7 bis 10, wobei der zwischen der ersten Richtung D1 und der zweiten Richtung D2 gebildete Winkel zwischen 10 und 90°, vorzugsweise zwischen 30 und 90°, beträgt.

12. Verwendung einer Packungsstruktur (24) nach einem der Ansprüche 7 bis 11 für das Inkontaktbringen eines Gases mit einem Katalysator, insbesondere für einen Strippvorgang des Katalysators.

13. Verfahren zur Herstellung einer Packungsstruktur, bei dem die folgenden Schritte durchgeführt werden:
a) Herstellen mehrerer Packungselemente (21) nach einem der Ansprüche 1 bis 6;
b) Konstruieren einer Anordnung der Packungselemente (21) anhand der folgenden Schritte:
i) Positionieren von mindestens zwei Packungselementen (21a) einer ersten Reihe von Packungselementen in einer ersten Richtung (D1);
ii) Einstecken von mindestens zwei Packungselementen (21b) einer zweiten Reihe von Packungselementen in einer in Bezug auf die erste Richtung (D1) geneigten zweiten Richtung (D2) in die Kerben (23) der Packungselemente (21a) der ersten Reihe;
iii) Einstecken von mindestens zwei Packungselementen (21a) einer ersten Reihe von Packungselementen (21) in der ersten Richtung (D1) in die Kerben (23) der Packungselemente (21b) der zweiten Reihe; und
iv) Wiederholen der Schritte ii) und iii), um das gewünschte Volumen auszubilden.

14. Herstellungsverfahren nach Anspruch 13, wobei das Herstellungsverfahren einen Schritt der Befestigung der Packungselemente umfasst, vorzugsweise durch Schweißen, Kleben, Schrauben oder Bolzen.

15. Herstellungsverfahren nach einem der Ansprüche 13 oder 14, wobei das Herstellungsverfahren einen Schritt des Zuschneidens des strukturierten Packungsvolumens (24) zum Ausbilden eines Winkelabschnitts eines Zylinders umfasst.

## Claims

1. Structured packing element having the form of a substantially rectangular planar plate, **characterized in that** said packing element (21) comprises a plurality of substantially rectangular slots (23) for nesting two packing elements that are inclined with respect to one another, and a plurality of substantially triangular recesses (22) for the formation of channels within the structured packing, said recesses (22) being openings formed in the planar plate that open onto an edge corner of the planar plate, said slots (23) and said recesses (22) being distributed over the two lengths of said planar plate symmetrically with respect to the longitudinal axis of said planar plate such that slots (23) on one side of the planar plate face other slots (23) on the other side of the planar plate, and such that recesses (22) on one side of the planar plate face other recesses (22) on the other side of the planar plate, and **in that** said recesses (22) are arranged between two slots (23) .

2. Packing element according to one of the preceding claims, wherein said slots (23) have a height h substantially equal to the thickness e of said planar plate.

3. Packing element according to either of the preceding claims, wherein the length L of said planar plate is between 25 and 100 cm, preferably between 45 and 55 cm.

4. Packing element according to one of the preceding claims, wherein the width 1 of said planar plate is between 3 and 15 cm, preferably between 5 and 10 cm.

5. Packing element according to one of the preceding claims, wherein the thickness e of said planar plate is between 2 and 10 mm, preferably between 4 and 8 mm.

6. Packing element according to one of the preceding claims, wherein the distance d between two consecutive slots (23) is between 1 and 50 cm, preferably between 10 and 30 cm.

7. Packing structure forming a volume comprising an arrangement of packing elements (21) according to one of the preceding claims, **characterized in that** said arrangement comprises a first series of packing elements (21a) arranged in a first direction (D1), and a second series of packing elements (21b) arranged in a second direction (D2) that is inclined with respect to said first direction (D1), such that the packing elements (21b) of said second series are nested in slots (23) of the packing elements (21a) of said first series, and such that the packing elements (21b) of said first series are nested in slots (23) of the packing elements (21b) of said second series.

8. Packing structure according to Claim 7, wherein said packing elements (21a, 21b) of said first and second series are fixed together, preferably by welding, adhesive bonding, screwing or bolting.

9. Packing structure according to either of Claims 7 and 8, wherein said structured packing volume (24) has substantially the shape of an angular portion of a cylinder.

10. Packing structure according to one of Claims 7 to 9, wherein said structured packing volume (24) has a height H of between 10 and 200 cm, preferably between 15 and 150 cm.

11. Packing structure according to one of Claims 7 to 10, wherein the angle formed between said first direction D1 and said second direction D2 is between 10 and 90°, preferably between 30 and 90°.

12. Use of a packing structure (24) according to one of Claims 7 to 11 for bringing a gas into contact with a catalyst, in particular for an operation of stripping said catalyst.

13. Method for manufacturing a packing structure, wherein the following steps are carried out:
a) fabricating a plurality of packing elements (21) according to one of Claims 1 to 6;
b) constructing an arrangement of said packing elements (21) by means of the following steps:
i) positioning at least two packing elements (21a) of a first series of packing elements in a first direction (D1);
ii) nesting at least two packing elements (21b) of a second series of packing elements in a second direction (D2) that is inclined with respect to said first direction (D1) within said slots (23) of said packing elements (21a) of said first series;
iii) nesting at least two packing elements (21a) of a first series of packing elements (21) in said first direction (D1) within said slots (23) of said packing elements (21b) of said second series; and
iv) repeating steps ii) and iii) to form the desired volume.

14. Manufacturing method according to Claim 13, wherein the manufacturing method comprises a step of fixing said packing elements, preferably by welding, adhesive bonding, screwing or bolting.

15. Manufacturing method according to either of Claims 13 and 14, wherein the manufacturing method comprises a step of cutting out said structured packing volume (24) to form an angular portion of a cylinder.
